# EUROPEAN PATENT APPLICATION

(11) **EP 3 407 247 A1**
(43) Date of publication of application: **28.11.2018**
(21) Application number: 18168604.9
(22) Date of filing: 20.04.2018
(51) Int. Cl.: G06K 9/00, H04L 29/06, H04M 11/08, H04N 7/18

(54) **METHOD, DEVICE, STORAGE MEDIUM AND COMPUTER PROGRAM FOR COMMUNICATION PROCESSING**

(30) Priority: 23.05.2017 CN 201710370020
(71) Applicant: Beijing Xiaomi Mobile Software Co., Ltd., Beijing 100085 (CN)
(72) Inventor: CHEN, Shuai, Beijing, 100085 (CN)
(74) Representative: Kudlek, Franz Thomas

(57) **Abstract**

The present invention relates to a method, device storage medium and computer program for communication processing. The method includes: determining a target object according to a communication request for communication with a communication responding device associated with the target object after the communication request is received from a communication requesting device; determining an image acquisition device according to the target object, the image acquisition device being capable of acquiring a target image containing an image of the target object, and the image acquisition device being a device different from the communication responding device; controlling the image acquisition device to acquire the target image; and controlling the image acquisition device to send the target image to the communication requesting device. With the technical solution, seamless combination of communication application and image acquisition application may be achieved, such that the user of the communication requesting device may observe the situation of the target object remotely after he sends the communication request, and such that the user of the communication requesting device may observe the target object when the communication request is not accepted. In this way, the user of the communication requesting device won't get worried about the target object, achieving an effect of controlling cooperation among the smart home appliances and improving user experience in smart home.

## Description

### TECHNICAL FIELD

The present invention relates to the field of smart home technology, and more particularly, to a method device, storage medium and computer program for communication processing.

### BACKGROUND

When a user is calling another user on the other end, the other user on the other end has to know that a call is coming before he puts through the call. If a user makes a phone call to a telephone at home, while for example his family is in sleep or is busy in the kitchen, and does not hear the ring bell of the phone call, the phone call from the user is not answered. In this case, the user may get worried about his family, and may be too anxious to focus on his work.

### SUMMARY

Embodiments of the present invention comprise a method, device storage medium and computer program for communication processing. The technical solutions are as follows.

According to a first aspect of the present invention, there is provided a method for communication processing, including:
determining a target object according to a communication request for communication with a communication responding device associated with the target object after the communication request is received from a communication requesting device;
determining an image acquisition device according to the target object, the image acquisition device being capable of acquiring a target image containing an image of the target object, and the image acquisition device being a device different from the communication responding device;
controlling the image acquisition device to acquire a target image; and
controlling the image acquisition device to send the target image to the communication requesting device.

The technical solution of the embodiment of the present invention may bring about the following advantageous effect. In the present embodiment, after a communication request from a communication requesting device to a communication responding device is received, an image acquisition device capable of photographing a target object corresponding to the communication request may be determined. Then, the image acquisition device may be controlled to acquire a target image containing the target object and send the target image to the communication requesting device. By making the communication responding device cooperated with the image acquisition device, the communication requesting device may also observe the target object remotely through the image acquisition device while communicating with the communication responding device. Therefore, the user won't get worried about the target object. Thus, it may achieve an effect of controlling cooperation among the smart home appliances and may improve user experience in smart home.

In an embodiment, the method also includes:
determining a target object according to a communication request for communication with a communication responding device associated with the target object after the communication request is received from a communication requesting device includes:
detecting within a preset time period from when the communication request is received, whether the communication responding device makes a communication responding operation; and
determining the target object according to the communication request in response to detecting no communication responding operation within the preset time period.

The technical solution of the embodiment of the present invention may bring about the following advantageous effect. In this embodiment, after a communication request is received, only when no communication responding operation applied on the communication responding device is detected within the preset time period, the subsequent steps are performed, to control the image acquisition device to acquire a target image containing the target object and send the target image to the communication requesting device. In this way, it may save network resources and may prevent the user of the communication responding device from missing the communication request.

In an embodiment, the target object includes at least one of: a user, an article and a room corresponding to the communication responding device.

The technical solution of the embodiment of the present invention may bring about the following advantageous effect. In this embodiment, the target object may be at least one of the user, the article and the room corresponding to the communication responding device. It may allow the user of the communication requesting device to observe situations of various objects he concerns about, and the method may have a wide application range.

In an embodiment, the target object includes the user, and determining a target object according to a communication request includes:
acquiring an identification of the communication responding device according to the communication request; and
determining the user according to the identification of the communication responding device.

The technical solution of the embodiment of the present invention may bring about the following advantageous effect. In this embodiment, a user may be determined according to the identification of the communication responding device acquired from the communication request. The determining method is simple and accurate.

In an embodiment, the target object includes the user, and determining an image acquisition device according to the target object includes:
acquiring a location of the target object; and
determining the image acquisition device according to the acquired location.

The technical solution of the embodiment of the present invention may bring about the following advantageous effect. In this embodiment, the image acquisition device may be determined according to the location of the user, such that the image acquisition device may accurately acquire a target image containing the user.

In an embodiment, the method also includes:
controlling the image acquisition device to acquire a first voice data surrounding the target object;
controlling the image acquisition device to send the first voice data to the communication requesting device;
controlling the communication requesting device to acquire a video data or a second voice data; and
controlling the communication requesting device to send the video data or the second voice data to the image acquisition device.

The technical solution of the embodiment of the present invention may bring about the following advantageous effect. In this embodiment, it is possible to control the image acquisition device to acquire a voice data surrounding the target object and send the voice data to the communication requesting device, such that the user of the communication requesting device may hear the voice surrounding the target object. It may facilitate the user of the communication requesting device to better learn about the situation of the target object. Moreover, it is also possible to control the communication requesting device to send a video data or a second voice data acquired to the image acquisition device to cause the image acquisition device to play the video data or the second voice data, such that the target object may acquire the voice or the video of the user of the communication requesting device through the image acquisition device, and turn to perform subsequent voice communication.

According to a second aspect of the embodiments of the present invention, there is provided a device for communication processing, including:
a first determining module configured to determine a target object according to a communication request for communication with a communication responding device associated with the target object after the communication request is received from a communication requesting device;
a second determining module configured to determine an image acquisition device according to the target object, the image acquisition device being capable of acquiring a target image containing an image of the target object, and the image acquisition device being a device different from the communication responding device;
a first controlling module configured to control the image acquisition device to acquire the target image; and
a second controlling module configured to control the image acquisition device to send the target image to the communication requesting device.

In an embodiment, the first determining module includes:
a detection sub-module configured to detect within a preset time period from when the communication request is received, whether the communication responding device makes a communication responding operation; and
a response sub-module configured to determine the target object according to the communication request in response to detecting no communication responding operation within the preset time period.

In an embodiment, the target object includes at least one of: a user, an article and a room corresponding to the communication responding device.

In an embodiment, the target object includes the user, and the first determining module includes:
a first acquiring sub-module configured to acquire an identification of the communication responding device according to the communication request; and
a first determining sub-module configured to determine the user according to the identification of the communication responding device.

In an embodiment, the target object includes the user, and the second determining module includes:
a second acquiring sub-module configured to acquire a location of the target object; and
a second determining sub-module configured to determine the image acquisition device according to the acquired location.

In an embodiment, the target object includes the user, and the device also includes:
a third controlling module configured to control the image acquisition device to acquire a first voice data surrounding the target object;
a fourth controlling module configured to control the image acquisition device to send the first voice data to the communication requesting device;
a fifth controlling module configured to control the communication requesting device to acquire a video data or a second voice data; and
a sixth controlling module configured to control the communication requesting device to send the video data or the second voice data to the image acquisition device.

According to a third aspect of the embodiments of the present invention, there is provided a device for communication processing, including:
a processor;
a memory for storing instructions executable by the processor;
wherein the processor is configured to:
determine a target object according to a communication request for communication with a communication responding device associated with the target object after the communication request is received from a communication requesting device;
determine an image acquisition device according to the target object, the image acquisition device being capable of acquiring a target image containing an image of the target object, and the image acquisition device being a device different from the communication responding device;
control the image acquisition device to acquire the target image; and
control the image acquisition device to send the target image to the communication requesting device.

According to a fourth aspect of the embodiments of the present invention, there is provided a computer-readable storage medium having stored therein instructions that, when being executed by a processor, cause the processor to perform:
determining a target object according to a communication request for communication with a communication responding device associated with the target object after the communication request is received from a communication requesting device;
determining an image acquisition device according to the target object, the image acquisition device being capable of acquiring a target image containing an image of the target object, and the image acquisition device being a device different from the communication responding device;
controlling the image acquisition device to acquire the target image; and
controlling the image acquisition device to send the target image to the communication requesting device.

In one particular embodiment, the steps of the method for communication processing are determined by computer program instructions.

Consequently, according to a fifth aspect, the invention is also directed to a computer program for executing the blocks of the method for communication processing as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart illustrating a method for communication processing according to an exemplary embodiment.
Fig. 2 is a flowchart illustrating a method for communication processing according to an exemplary embodiment.
Fig. 3 is a flowchart illustrating a method for communication processing according to an exemplary embodiment.
Fig. 4 is a flowchart illustrating a method for communication processing according to an exemplary embodiment.
Fig. 5 is a flowchart illustrating a method for communication processing according to an exemplary embodiment.
Fig. 6 is a flowchart illustrating a method for communication processing according to an exemplary embodiment.
Fig. 7 is a flowchart illustrating a method for communication processing according to an exemplary embodiment.
Fig. 8 is a flowchart illustrating a method for communication processing according to an exemplary embodiment.
Fig. 9 is a block diagram illustrating a device for communication processing according to an exemplary embodiment.
Fig. 10 is a block diagram illustrating a device for communication processing according to an exemplary embodiment.
Fig. 11 is a block diagram illustrating a device for communication processing according to an exemplary embodiment.
Fig. 12 is a block diagram illustrating a device for communication processing according to an exemplary embodiment.
Fig. 13 is a block diagram illustrating a device for communication processing according to an exemplary embodiment.
Fig. 14 is a block diagram illustrating a device for communication processing according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

In order to solve the above problem that another user on the other end does not hear a communication request and does not answer the phone call, in the embodiments of the present invention, after a communication responding device receives a communication request from a communication requesting device for communication with the communication responding device associated with a target object, the target object may be determined according to the communication request. An image acquisition device may be determined according to the target object. The image acquisition device is capable of acquiring a target image containing an image of the target object, and the image acquisition device is a device different from the communication responding device. The image acquisition device is controlled to acquire the target image and the image acquisition device is controlled to send the target image to the communication requesting device, such that the user of the communication requesting device may observe the situation of the target object remotely and won't get worried, thus achieving an effect of controlling cooperation among the smart home appliances and improving user experience in smart home.

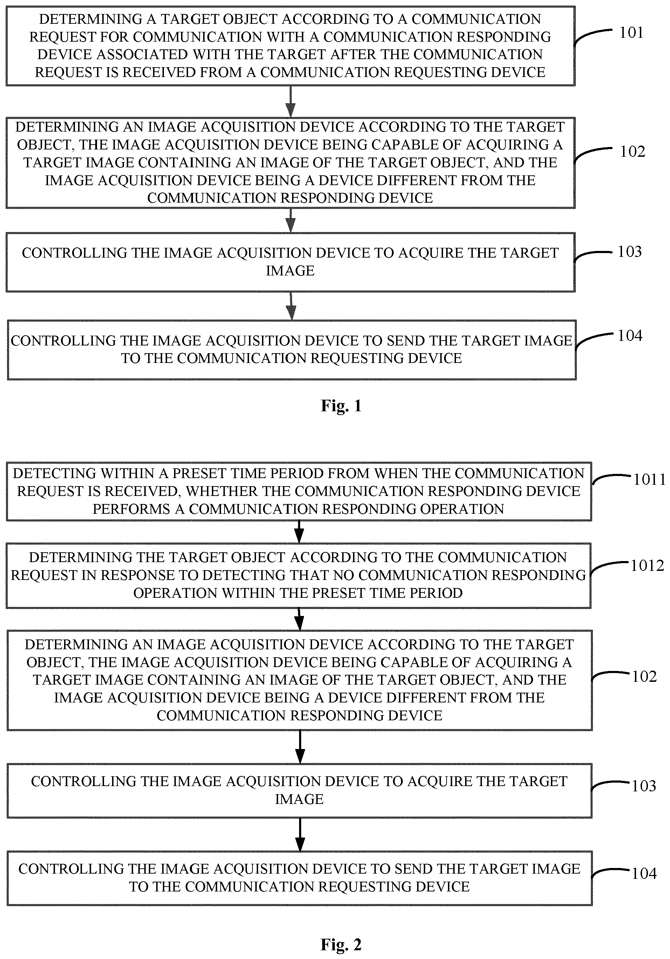

Fig. 1 is a flowchart illustrating a method for communication processing according to an exemplary embodiment. As shown in Fig. 1, the method for communication processing is applied in a server or other device, and includes the following steps 101 to 104.

At step 101, after a communication request is received from a communication requesting device for communication with a communication responding device associated with a target object, the target object is determined according to the communication request.

At step 102, an image acquisition device is determined according to the target object, the image acquisition device is capable of acquiring a target image containing an image of the target object, and the image acquisition device is a device different from the communication responding device.

At step 103, the image acquisition device is controlled to acquire the target image.

At step 104, the image acquisition device is controlled to send the target image to the communication requesting device.

In the embodiment, when the communication requesting device such as a terminal A calls the communication responding device such as a terminal B, the terminal A may send a communication request to the terminal B through a server. The communication request is for requesting communication with the terminal B. In this case, after the server receives the communication request from the terminal A, the server may determine that the communication responding device corresponding to the terminal A is the terminal B according to the communication request, and determine an object corresponding to the terminal B as the target object.

In this embodiment, the server may store records of image acquisition devices corresponding to the target objects which are capable of photographing the target objects. Then, after the server determines a target object, the server may determine an image acquisition device capable of photographing the target object. Here, the image acquisition device is a device different from the communication responding device (i.e., different from the terminal B). When the server forwards the communication request from the terminal A to the communication responding device (i.e., the terminal B), the server may determine an image acquisition device capable of photographing a target object corresponding to the communication request and control the image acquisition device to acquire the target image and then to send the target image to the communication requesting device (i.e., the terminal A). In this way, the communication requesting device (i.e., the terminal A) may play the target image of the target object. In case when the user of the terminal B does not accept the communication request since he does not hear the communication request, the user of the terminal A may watch the target image and learn about the situation of the target object. Therefore, the user of the terminal A will be prevented from getting worried and thus being too anxious to focus on his work.

In the present embodiment, after a communication request from a communication requesting device to a communication responding device is received, an image acquisition device capable of photographing a target object corresponding to the communication request may be determined. Then, the image acquisition device may be controlled to acquire a target image containing an image of the target object and send the target image to the communication requesting device. By integrating the communication responding device with the image acquisition device, the communication requesting device may also observe the target object remotely through the image acquisition device while communicating with the communication responding device. Therefore, the user won't get worried about the target object. Thus, it may achieve an effect of controlling cooperation among the smart home appliances and may improve user experience in smart home.

In an embodiment of the present invention, referring to Fig. 2, which is a flowchart illustrating a method for communication processing according to an exemplary embodiment, the step 101 in the above disclosed method for communication processing may be implemented as the following step 1011 and step 1012.

At step 1011, after a communication request is received from a communication requesting device for communication with a communication responding device associated with a target object, it is detected, within a preset time period from when the communication request is received, whether the communication responding device performs a communication responding operation.

At step 1012, in response to detecting no communication responding operation within the preset time period, the target object is determined according to the communication request.

In this embodiment, when the communication requesting device (i.e., the terminal A) calls the communication responding device (i.e., the terminal B), if the user of the terminal B instructs the terminal B to accept the communication request, the terminal A and the terminal B may communicate with each other, and the user of the terminal A may speak to the user of the terminal B, to learn about the situation of the target object concerned by the user of the terminal A. In this case, it is not necessary for the image acquisition device to capture and send the target image containing an image of the target object. Therefore, in order to save network resources, in this embodiment, after the communication request is received, it is detected within a preset time period from when the communication request is received, whether the communication responding device performs a communication responding operation. When the communication responding device performs a communication responding operation within the preset time period, the server finishes the process. Here, the communication responding device (i.e., the terminal B) may accept or reject the communication request from the communication requesting device (i.e., the terminal A) in response to the communication responding operation. When no communication responding operation is detected within the preset time period, it means that the user of the terminal B may not notice the communication request. In this case, in order to prevent the user of the terminal B from missing the communication request, the server may determine the target object according to the communication request, determine an image acquisition device according to the target object, and control the image acquisition device to acquire a target image and then send the target image to the communication requesting device (i.e., the terminal A).

In this embodiment, after a communication request is received, only when no communication responding operation associated with the communication responding device is detected within the preset time period, the subsequent steps are performed, to control the image acquisition device to acquire a target image containing the image of the target object and send the target image to the communication requesting device. In this way, network resources are saved while the user of the communication responding device is prevented from missing the communication request.

In an embodiment of the present invention, in the method for processing communication disclosed above, the target object includes at least one of the followings: a user, an article and a room corresponding to the communication responding device.

In this embodiment, the target object may be one, two or three of the three types of objects: a user, an article and a room. After a communication request from a communication requesting device to a communication responding device is received, since the communication request is for requesting communication with a certain communication responding device, the server may determine the communication responding device according to the communication request, and further determine a user corresponding to the communication responding device, or determine an article corresponding to the communication responding device, or determine a room corresponding to the communication responding device, or determine a user and an article corresponding to the communication responding device, or determine a room and a user corresponding to the communication responding device, or determine an article and a room corresponding to the communication responding device, or determine a room, an article and a user corresponding to the communication responding device.

In this embodiment, when the target object includes the user corresponding to the communication responding device, after the server acquires the communication request, the server may determine the communication responding device according to the communication request, and further determine the user of the communication responding device according to the user information recorded by the communication responding device when the communication responding device was registered to the server. Then, the server may determine an image acquisition device which is capable of photographing the user of the communication responding device, and control the image acquisition device to acquire a target image containing an image of the user and to send the target image acquired to the communication requesting device. In this way, the communication requesting device may acquire an image associated with the user corresponding to the communication responding device, and it is possible for the current activity of the user to be watched remotely. Therefore, the user of the communication requesting device won't get worried about why the user of the communication responding device does not answer the communication request.

In this embodiment, when the target object includes a room corresponding to the communication responding device, after the server acquires a communication request, the server may determine the communication responding device according to the communication request, and further determine location information of the communication responding device. Then, the server may determine a room where the communication responding device is located according to the location information of the communication responding device. After that, the server may determine an image acquisition device which is capable of photographing the room where the communication responding device is located, and control the image acquisition device to acquire a target image containing an image of the room and to send the acquired target image to the communication requesting device. In this way, the communication requesting device may acquire an image associated with the room corresponding to the communication responding device, and it is possible for the current situation of the room to be watched remotely. Therefore, the user of the communication requesting device may call a communication responding device disposed at home at any time, and when somebody is at home and answers the communication request, the user of the communication requesting device won't get worried about the situation at home. When nobody is at home, the user of the communication requesting device may observe the situation in the room at home remotely through the method of the present embodiment. For example, the user may observe whether there is any trouble in the room at home, such as a leaking water pipe, or an appliance operational trouble, and so on. Thus, he won't get worried about the current situation in the room where the communication responding device is located.

In this embodiment, when the target object includes an article corresponding to the communication responding device, after the server acquires a communication request, the server may determine the communication responding device according to the communication request, and further determine an article corresponding to the communication responding device. Then, the server may determine an image acquisition device which is capable of photographing the article corresponding to the communication responding device, and control the image acquisition device to acquire a target image containing an image of the article and to send the acquired target image to the communication requesting device. In this way, the communication requesting device may acquire an image associated with the article corresponding to the communication responding device, and it is possible for the current state of the article to be watched remotely. Therefore, the user of the communication requesting device won't get worried about the article corresponding to the communication responding device when nobody answers the communication request, and it may facilitate the user of the communication requesting device to timely observe the situation of the article.

In this embodiment, the target object may be at least one of the user, the article and the room corresponding to the communication responding device. It may allow the user of the communication requesting device to observe situations of various objects he concerns about, and the method may be applied widely.

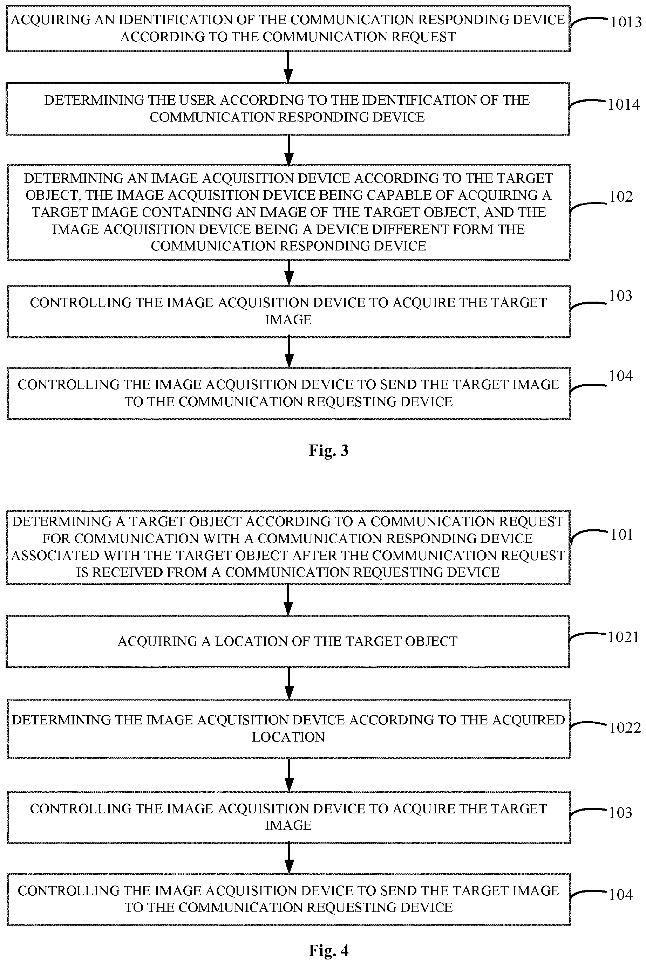

In an embodiment of the present invention, when the target object includes the user, referring to Fig.3, which is a flowchart illustrating a method for communication processing according to an exemplary embodiment, the step 101 of the method for communication processing disclosed above may be implemented as the following step 1013 and step 1014,

At step 1013, an identification of the communication responding device is acquired according to the communication request.

At step 1014, a user is determined according to the identification of the communication responding device.

In this embodiment, since the communication request is for requesting communication with a certain communication responding device, the communication request may carry an identification of the communication responding device, and the server may acquire the identification of the communication responding device from the communication request. Moreover, when the communication responding device was registered to the server, user information corresponding to the communication responding device might be recorded in the server. Thus, the server may store user information corresponding to the identification of the communication responding device. Therefore, the server may determine the user of the communication responding device corresponding to the identification after the server acquires the identification of the communication responding device from the communication request.

In this embodiment, a user may be determined according to the identification of the communication responding device acquired from the communication request. The determining method is simple and accurate.

In an embodiment of the present invention, when the target object includes the user, referring to Fig. 4, which is a flowchart illustrating a method for processing communication according to an exemplary embodiment, the step 102 of the method for communication processing disclosed above may be implemented as the following step 1021 and step 1022.

At step 1021, a location of the target object is acquired.

At step 1022, the image acquisition device is determined according to the acquired location.

In this embodiment, when the target object includes the user, since the user may carry or wear an electronic device such as an electronic bracelet, electronic glasses or other smart wearable device, after the server determines the user of the communication responding device, the server may receive a location of the smart wearable device sent by the smart wearable device corresponding to the user. Since the location of the smart wearable device is the location of the user, after the server acquires the location of the user, the server may determine an image acquisition device which is capable of photographing the acquired location according to the location of the user. Here, the server may previously store locations which may be photographed by various image acquisition devices.

In another embodiment, the target object may be a room. In this case, the server may also receive, from a router, terminal identifications of various terminals in the room where the router is located that access the router. Thus, the server may determine an identification of an image acquisition device in the room where the communication responding device is located, according to the identifications of the terminals in respective rooms and the identification of the communication responding device which are previously stored. Here, the local area network may be a local area network of a family. For example, a router is installed in a house of the family. The router of the family may be connected to the Internet, and the terminals in the house of the family may be connected to the Internet through the router of the family. Thus, the terminals in the house of the family form a local area network corresponding to a set of rooms, and the terminals in the rooms are the terminals in the local area network. After the communication responding device (i.e., the terminal B) and an image acquisition device 1 or other terminals in the room access the router, the router may obtain an identification 1 of the communication responding device (i.e., the terminal B) and an identification 2 of the image acquisition device 1. Then, the router may send the identification 1 of the communication responding device (i.e., the terminal B) and the identification 2 of the image acquisition device 1 in the room to the server. Thus, since the server may previously store the terminal identifications of the terminals in the room where the terminal B is located are the identification 1 of the terminal B, the identification 2 of the image acquisition device 1 and the like which have access to the router in the room. After the server receives the communication request from the communication requesting device (i.e., the terminal A), the server may determine the room where the terminal B with the terminal identification 1 is located according to the identification 1 of the communication responding device (i.e., the terminal B) carried in the communication request, and further determine that the identification of the image acquisition device in that room is the identification 2. Then, the server may control the image acquisition device 1 with the identification 2 to capture a target image containing an image of the target object and send the target image to the communication requesting device (i.e., the terminal A). The communication requesting device (i.e., the terminal A) may play the received target image. The user of the terminal A may observe the situation at home by watching the played target image.

In this embodiment, the image acquisition device may be determined according to the location of the user, such that the image acquisition device may accurately acquire a target image containing an image of the user.

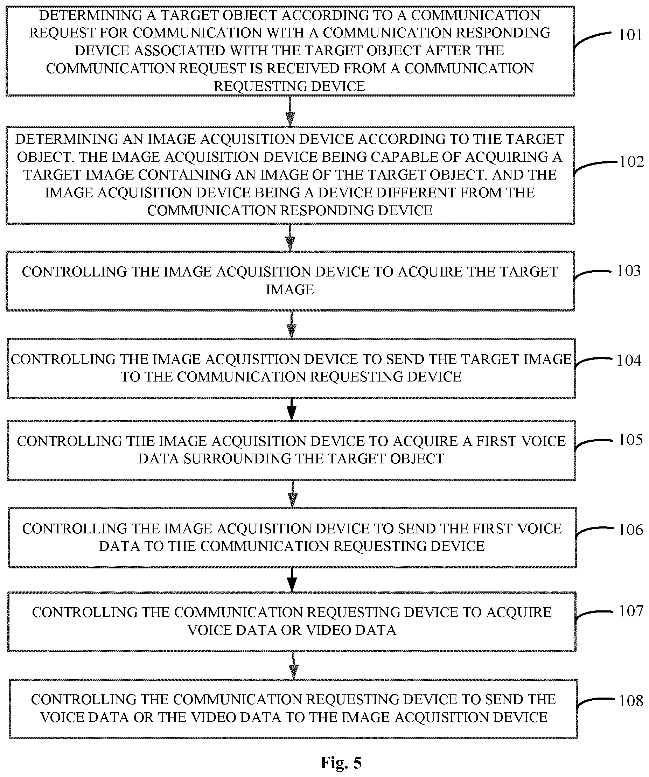

In an embodiment of the present invention, when the target object includes the user, referring to Fig. 5, which is a flowchart illustrating a method for communication processing according to an exemplary embodiment, the method for communication processing disclosed above may also include the following steps 105 to 108.

At step 105, the image acquisition device is controlled to acquire a first voice data surrounding the target object.

At step 106, the image acquisition device is controlled to send the first voice data to the communication requesting device.

At step 107, the communication requesting device is controlled to acquire a second voice data or a video data.

At step 108, the communication requesting device is controlled to send the voice data or the second video data to the image acquisition device.

In this embodiment, the image acquisition device may also be provided with a microphone or other voice acquisition components. Thus, the server may also control the image acquisition device to acquire a first voice data surrounding the target object in synchronization with the server controlling the image acquisition device to acquire a target image. When the server controls the image acquisition device to send the target image to the communication requesting device, the server may also control the image acquisition device to send the first voice data to the communication requesting device synchronously. Thus, the communication requesting device may play the target image with the synchronized first voice data, such that the user of the communication requesting device may not only watch the image of the target object, but also hear the voice surrounding the target object. It may facilitate the user of the communication requesting device to better learn about the situation of the target object.

In this embodiment, when the image acquisition device is provided with a voice speaker, the server may also control the communication requesting device to acquire a second voice data, and to send the second voice data to the image acquisition device. The image acquisition device may play the second voice data with the voice speaker. The second voice data may include a voice of the user of the communication requesting device. Thus, when the target object is an article or a room, the user of the communication requesting device may cause the image acquisition device to play the second voice data, to remotely control the article or the electronic devices in the room with voice. When the target object is a pet, the user of the communication requesting device may also cause the image acquisition device to play the second voice data to soothe the pet. When the target object is the user, if the server may control the image acquisition device to send the captured target image of the target object and the first voice data of the surrounding to the communication responding device, the user of the communication requesting device may cause the image acquisition device to play a video of his own to the user of the communication responding device. Then the user of the communication responding device may notice that the image acquisition device is playing a video and then may conduct voice communication with the user of the communication requesting device. In this way, when the user of the communication responding device does not notice the communication request or it is not convenient for the user of the communication responding device to speak to the user of the communication requesting device through the communication responding device, the user of the communication responding device may still use the image acquisition device to conduct voice communication with the user of the communication requesting device.

In this embodiment, when the image acquisition device is provided with a display screen for playing a video, the server may also control the communication requesting device to acquire a video data, and send the video data to the image acquisition device. The image acquisition device may play the video data with the display screen. The video data may include a video data of the user of the communication requesting device. Thus, if the server may control the image acquisition device to send the target image of the target object and the first voice data of the surrounding to the communication responding device, when the target object is the user of the communication responding device, the user of the communication requesting device may cause the image acquisition device to play a video of his own to the user of the communication responding device. Then the user of the communication responding device may notice that the image acquisition device is playing a video and then may conduct video communication with the user of the communication requesting device. In this way, when the user of the communication responding device does not notice the communication request or it is not convenient for the user of the communication responding device to speak to the user of the communication requesting device through the communication responding device, the user of the communication responding device may still use the image acquisition device to conduct video communication with the user of the communication requesting device.

In this embodiment, it is possible to control the image acquisition device to acquire a first voice data surrounding the target object and to send the first voice data to the communication requesting device, such that the user of the communication requesting device may hear the voice surrounding the target object. It may facilitate the user of the communication requesting device to better learn about the situation of the target object. Moreover, it is also possible to control the communication requesting device to send a video data or a second voice data acquired to the image acquisition device to cause the image acquisition device to play the video data or the second voice data, such that the target object may acquire the voice or the video of the user of the communication requesting device through the image acquisition device, and turn to perform subsequent voice communication or voice command.

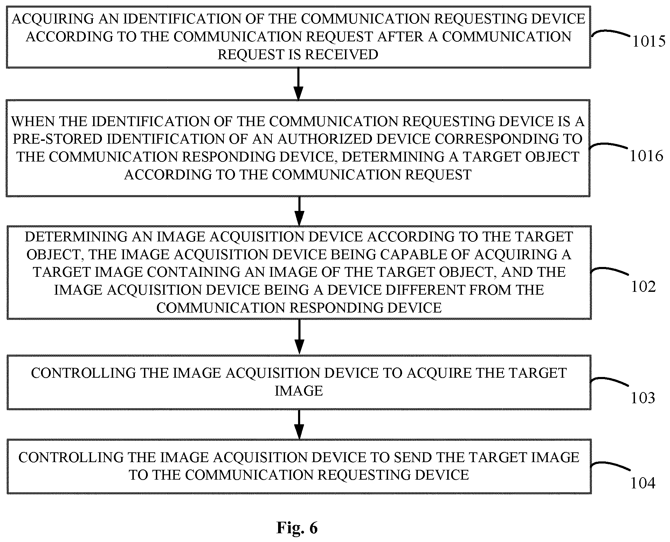

In an embodiment of the present invention, referring to Fig. 6, which is a flowchart illustrating a method for processing communication according to an exemplary embodiment, the step 101 in the method for communication processing disclosed above may be implemented as step 1015 and step 1016.

At step 1015, after a communication request is received, an identification of the communication requesting device is acquired according to the communication request.

At step 1016, when the identification of the communication requesting device is a pre-stored identification of an authorized device corresponding to the communication responding device, a target object is determined according to the communication request.

In this embodiment, in order to protect the privacy of the family, only part of the important or key users may check the situation of the target object corresponding to the communication responding device remotely through the image acquisition device. The server may previously store identifications of authorized devices corresponding to the respective communication responding devices. For example, the authorized devices corresponding to the terminal B have identifications 3, 5 and 6, and the authorized devices corresponding to the terminal A have identifications 1, 7 and 8, and so on. Thus, after the server receives a communication request from the terminal A to the terminal B, the server may firstly check that the identification 3 of the communication requesting device (i.e., the terminal A) is one of the identifications (the identifications 3, 5 and 6) of authorized devices corresponding to the communication responding device (i.e., the terminal B), and it may be determined that the communication requesting device (i.e., the terminal A) is a pre-stored authorized device corresponding to the communication responding device (i.e., the terminal B). This means that the user of the communication requesting device (i.e., the terminal A) has been authorized to check the target object. In this case, the server may control the image acquisition device which is capable of photographing the target object to send the captured target image to the communication requesting device (i.e., the terminal A), such that the communication requesting device (i.e., the terminal A) may play the image data for the user of the terminal A.

In this embodiment, only when it is determined that the communication requesting device is a pre-stored authorized device corresponding to the communication responding device, the subsequent steps may be performed to control the image acquisition device to acquire a target image containing an image of the target object and send the target image to the communication requesting device. In this way, it may protect the privacy of the user and improve the security in operation.

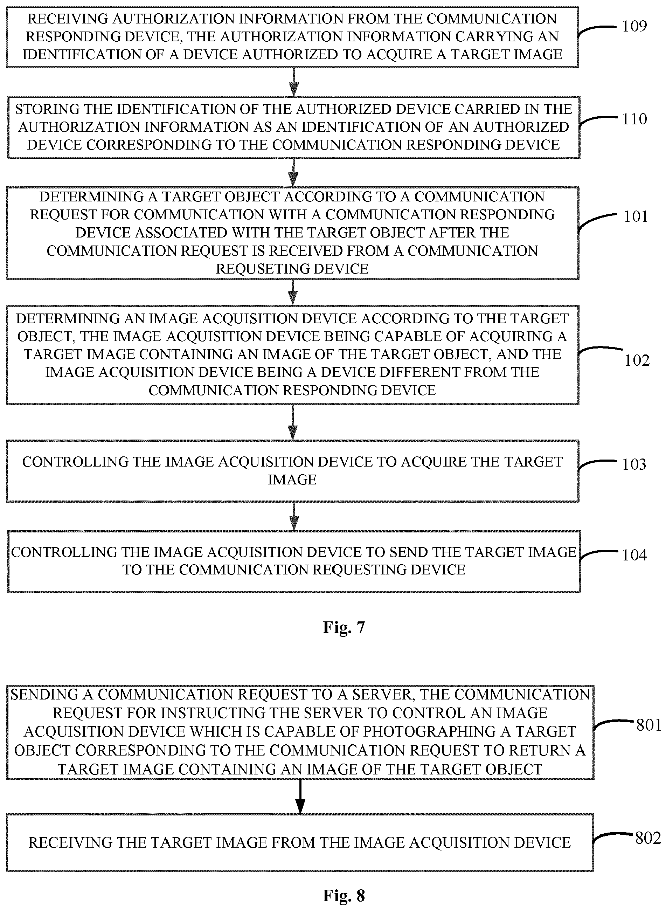

In an embodiment of the present invention, referring to Fig. 7, which is a flowchart illustrating a method for communication processing according to an exemplary embodiment, the method for communication processing disclosed above may also include the following steps 109 and 110.

At step 109, authorization information is received from the communication responding device, the authorization information carrying an identification of a device authorized to acquire a target image.

At step 110, the identification of the authorized device carried in the authorization information is stored as an identification of an authorized device corresponding to the communication responding device.

In this embodiment, the communication requesting device may send to the communication responding device a request for permission to acquire a target image. If the communication responding device approves the request, the communication responding device may send authorization information carrying the identification of the communication requesting device to the server. Then, the server may store the identification of the communication requesting device carried in the authorization information as an identification of an authorized device corresponding to the communication responding device. In this way, the server may pre-store an identification of an authorized device corresponding to the communication responding device. Here, the authorization information may also be sent by the communication requesting device to the server after the request is approved.

In this embodiment, if the user of the communication responding device wishes to withdraw the permission of a certain authorized device, the user of the communication responding device may send a permission withdrawing instruction to the server to instruct the server to delete the identification of the authorized terminal.

In this embodiment, the identification of the authorized device corresponding to the communication responding device may be obtained from the received authorization information. The obtaining method is accurate and convenient.

Fig. 8 is a flowchart illustrating a method for communication processing according to an exemplary embodiment. As shown in Fig. 8, the method for communication processing is applied in a communication requesting device, and includes the following steps 801 and 802.

At step 801, a communication request is sent to a server, the communication request is for instructing the server to control an image acquisition device which is capable of photographing a target object corresponding to the communication request to return a target image containing an image of the target object.

At step 802, the target image is received from the image acquisition device.

In this embodiment, the method for communication processing is applied in a communication requesting device. When the communication requesting device (i.e., the terminal A) calls the communication responding device (i.e., the terminal B), the terminal A may send a communication request to the terminal B through a server. The communication request is for requesting communication with the terminal B. In this case, after the server receives the communication request from the terminal A, the server may determine that the communication responding device corresponding to the terminal A is the terminal B according to the communication request, and determine an object corresponding to the terminal B as the target object. After the server determines the target object, the server may determine an image acquisition device capable of photographing the target object. Here, the image acquisition device is a device different from the communication responding device (i.e., other than the terminal B). When the server forwards the communication request from the terminal A to the communication responding device (i.e., the terminal B), the server may determine an image acquisition device capable of photographing a target object corresponding to the communication request and control the image acquisition device to acquire the target image and then to send the target image to the communication requesting device (i.e., the terminal A). In this way, the communication requesting device (i.e., the terminal A) may play the target image containing an image of the target object.

In this embodiment, after a communication request for communication with the communication responding device is sent to the server, it is possible to instruct the server to control an image acquisition device which is capable of photographing a target object corresponding to the communication request to send the captured target image to the communication requesting device. By integrating the communication responding device with the image acquisition device, seamless combination of communication application and image acquisition application may be achieved, such that the user of the communication requesting device may observe the situation of the target object remotely and won't get worried about the target object, thus improving user experience in smart home.

The following are device embodiments of the present invention which may perform the above method embodiments of the present invention.

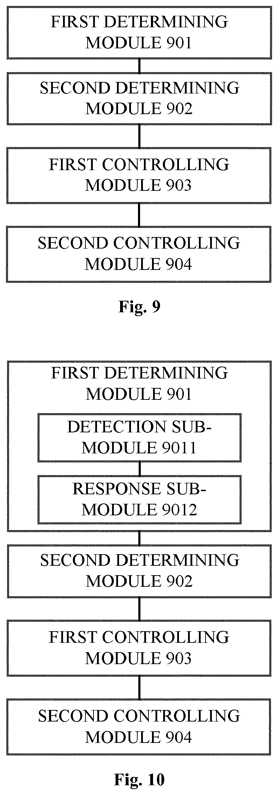

Fig. 9 is a block diagram illustrating a device for processing communication according to an exemplary embodiment. The device may be implemented as a part or the whole of an electronic device through software, hardware or combination of the both. As shown in Fig. 9, the device for communication processing includes: a first determining module 901, a second determining module 902, a first controlling module 903 and a second controlling module 904.

The first determining module 901 is configured to determine a target object according to a communication request for communication with a communication responding device associated with the target object after the communication request is received from a communication requesting device.

The second determining module 902 is configured to determine an image acquisition device according to the target object, the image acquisition device being capable of acquiring a target image containing an image of the target object, and the image acquisition device being a device different from the communication responding device.

The first controlling module 903 is configured to control the image acquisition device to acquire the target image.

The second controlling module 904 is configured to control the image acquisition device to send the target image to the communication requesting device.

As an embodiment, Fig. 10 is a block diagram illustrating a device for communication processing according to an exemplary embodiment. As shown in Fig. 10, the device for communication processing disclosed above may also configure the first determining module 901 as including a detection sub-module 9011 and a response sub-module 9012.

The detection sub-module 9011 is configured to detect, within a preset time period from when the communication request is received, whether the communication responding device makes a communication responding operation.

The response sub-module 9012 is configured to determine the target object according to the communication request in response to detecting no communication responding operation within the preset time period.

In an embodiment, in the device for processing communication disclosed above, the target object includes at least one of: a user, an article and a room corresponding to the communication responding device.

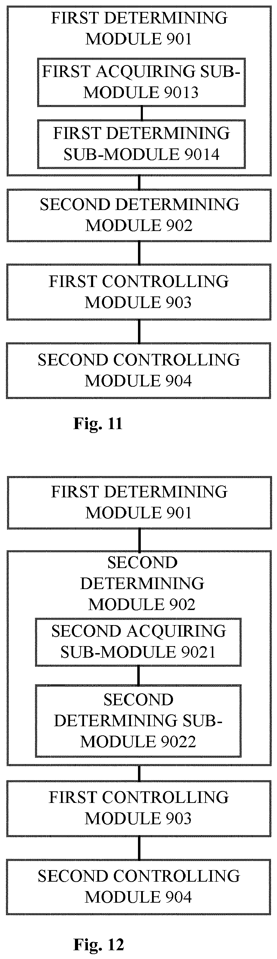

As an embodiment, Fig. 11 is a block diagram illustrating a device for communication processing according to an exemplary embodiment. As shown in Fig. 11, when the target object includes the user, the device for processing communication disclosed above may also configure the first determining module 901 as including a first acquiring sub-module 9013 and a first determining sub-module 9014.

The first acquiring sub-module 9013 is configured to acquire an identification of the communication responding device according to the communication request.

The first determining sub-module 9014 is configured to determine the user according to the identification of the communication responding device.

As an embodiment, Fig. 12 is a block diagram illustrating a device for communication processing according to an exemplary embodiment. As shown in Fig. 12, when the target object includes the user, the device for processing communication disclosed above may also configure the second determining module 902 as including a second acquiring sub-module 9021 and a second determining sub-module 9022.

The second acquiring sub-module 9021 is configured to acquire a location of the target object.

The second determining sub-module 9022 is configured to determine the image acquisition device according to the acquired location.

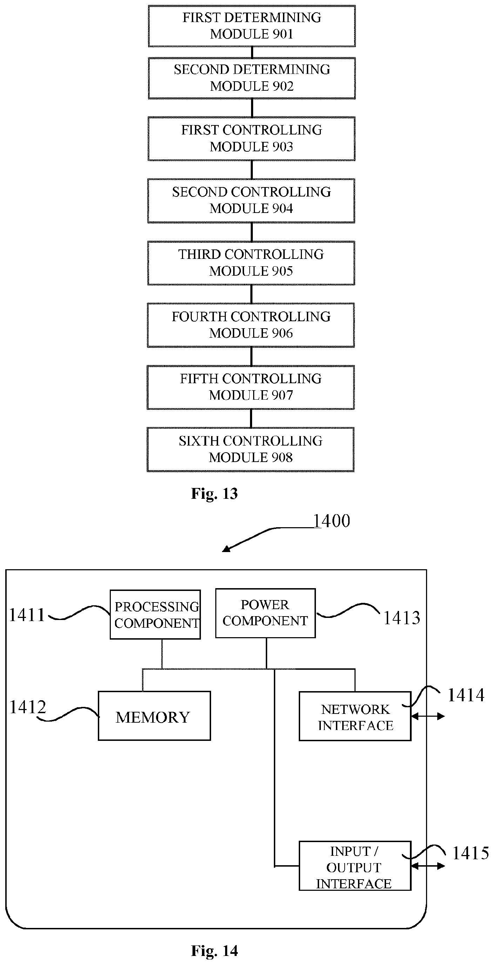

As an embodiment, Fig. 13 is a block diagram illustrating a device for communication processing according to an exemplary embodiment. As shown in Fig. 13, the device for communication processing disclosed above may also be configured to include a third controlling module 905, a fourth controlling module 906, a fifth controlling module 907 and a sixth controlling module 908.

The third controlling module 905 is configured to control the image acquisition device to acquire a first voice data surrounding the target object.

The fourth controlling module 906 is configured to control the image acquisition device to send the first voice data to the communication requesting device.

The fifth controlling module 907 is configured to control the communication requesting device to acquire a video data or a second voice data.

The sixth controlling module 908 is configured to control the communication requesting device to send the video data or the second voice data to the image acquisition device.

With respect to the devices in the above embodiments, the specific manners for operations performed by individual modules therein have been described in detail in the embodiments regarding the relevant methods, which will not be elaborated herein.

Fig. 14 is a block diagram illustrating a device for communication processing according to an exemplary embodiment. For example, the device 1400 may be provided as a server. The device 1400 includes a processing component 1411 that further includes one or more processors, and memory resources represented by a memory 1412 for storing instructions executable by the processing component 1411, such as application programs. The application programs stored in the memory 1412 may include one or more modules each corresponding to a set of instructions. Further, the processing component 1411 is configured to execute the instructions to perform the above described method.

The device 1400 may also include a power component 1413 configured to perform power management of the device 1400, wired or wireless network interface(s) 1414 configured to connect the device 1400 to a network, and an input/output (I/O) interface 1415. The device 1400 may operate based on an operating system stored in the memory 1412, such as Windows Server™, Mac OS X™, Unix™, Linux™, FreeBSD™, or the like.

In an exemplary embodiment, there is provided a computer-readable storage medium including instructions, such as included in the memory 1412, executable by the processor in the device 1400, for performing the above-described methods. For example, the computer-readable storage medium can be a ROM, a RAM, a CD-ROM, a magnetic tape, a floppy disc, an optical data storage device, and the like.

The computer-readable storage medium has stored therein instructions that, when being executed by a processor, cause the processor to perform the following steps:
determining a target object according to a communication request for communication with a communication responding device associated with the target object after the communication request is received from a communication requesting device;
determining an image acquisition device according to the target object, the image acquisition device being capable of acquiring a target image containing an image of the target object, and the image acquisition device being a device different from the communication responding device;
controlling the image acquisition device to acquire the target image; and
controlling the image acquisition device to send the target image to the communication requesting device.

The instructions in the computer-readable storage medium, when being executed by the processor, may also cause the processor to perform the following steps:
determining a target object according to a communication request after the communication request is received, includes:
detecting within a preset time period from when the communication request is received, whether the communication responding device makes a communication responding operation; and
determining the target object according to the communication request in response to detecting no communication responding operation within the preset time period.

The instructions in the computer-readable storage medium, when being executed by the processor, may also cause the processor to perform the following steps:
the target object includes at least one of: a user, an article and a room corresponding to the communication responding device.

The instructions in the computer-readable storage medium, when being executed by the processor, may also cause the processor to perform the following steps:
the target object includes the user, and determining a target object according to a communication request includes:
acquiring an identification of the communication responding device according to the communication request; and
determining the user according to the identification of the communication responding device.

The instructions in the computer-readable storage medium, when being executed by the processor, may also cause the processor to perform the following steps:
the target object includes the user, and determining an image acquisition device according to the target object includes:
acquiring a location of the target object; and
determining the image acquisition device according to the acquired location.

The instructions in the computer-readable storage medium, when being executed by the processor, may also cause the processor to perform the following steps:
controlling the image acquisition device to acquire a first voice data surrounding the target object;
controlling the image acquisition device to send the first voice data to the communication requesting device;
controlling the communication requesting device to acquire a video data or a second voice data; and
controlling the communication requesting device to send the video data or the second voice data to the image acquisition device.

The embodiment also discloses a device for processing communication, including:
a processor;
a memory for storing instructions executable by the processor;
wherein the processor is configured to:
determine a target object according to a communication request for communication with a communication responding device associated with the target object after the communication request is received from a communication requesting device;
determine an image acquisition device according to the target object, the image acquisition device being capable of acquiring a target image containing an image of the target object, and the image acquisition device being a device different from the communication responding device;
control the image acquisition device to acquire the target image; and
control the image acquisition device to send the target image to the communication requesting device.

The processor is further configured to perform:
determining a target object according to a communication request for communication with a communication responding device associated with the target object after the communication request is received from a communication requesting deivce includes:
detecting within a preset time period from when the communication request is received, whether the communication responding device makes a communication responding operation; and
determining the target object according to the communication request in response to detecting no communication responding operation within the preset time period.

The processor is further configured to perform:
the target object includes at least one of: a user, an article and a room corresponding to the communication responding device.

The processor is further configured to perform:
the target object includes the user, and determining a target object according to a communication request includes:
acquiring an identification of the communication responding device according to the communication request; and
determining the user according to the identification of the communication responding device.

The processor is further configured to perform:
the target object includes the user, and determining an image acquisition device according to the target object includes:
acquiring a location of the target object; and
determining the image acquisition device according to the acquired location.

The processor is further configured to perform:
controlling the image acquisition device to acquire a first voice data surrounding the target object;
controlling the image acquisition device to send the first voice data to the communication requesting device;
controlling the communication requesting device to acquire a video data or a second voice data; and
controlling the communication requesting device to send the video data or the second voice data to the image acquisition device.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for communication processing, comprising:
determining (101) a target object according to a communication request for communication with a communication responding device associated with the target object after the communication request is received from a communication requesting device;
determining (102) an image acquisition device according to the target object, the image acquisition device being capable of acquiring a target image containing an image of the target object, and the image acquisition device being a device different from the communication responding device;
controlling (103) the image acquisition device to acquire the target image; and
controlling (104) the image acquisition device to send the target image to the communication requesting device.

2. The method of claim 1, wherein determining (101) a target object according to a communication request for communication with a communication responding device associated with the target object after the communication request is received from a communication requesting device comprises:
detecting (1011) within a preset time period from when the communication request is received, whether the communication responding device performs a communication responding operation; and
determining (1012) the target object according to the communication request in response to detecting no communication responding operation within the preset time period.

3. The method of claim 1 or claim 2, wherein the target object comprises at least one of: a user, an article and a room corresponding to the communication responding device.

4. The method of claim 3, wherein the target object comprises the user, and determining (101) a target object according to a communication request comprises:
acquiring (1013) an identification of the communication responding device according to the communication request; and
determining (1014) the user according to the identification of the communication responding device.

5. The method of claim 3 or 4, wherein the target object comprises the user, and determining (102) an image acquisition device according to the target object comprises:
acquiring (1021) a location of the target object; and
determining (1022) the image acquisition device according to the acquired location.

6. The method of any one of the preceding claims, further comprising:
controlling (105) the image acquisition device to acquire a first voice data surrounding the target object;
controlling (106) the image acquisition device to send the first voice data to the communication requesting device;
controlling (107) the communication requesting device to acquire a video data or a second voice data; and
controlling (108) the communication requesting device to send the video data or the second voice data to the image acquisition device.

7. A device for communication processing, comprising:
a first determining module (901) configured to determine a target object according to a communication request for communication with a communication responding device associated with the target object after the communication request is received from a communication requesting device;
a second determining module (902) configured to determine an image acquisition device according to the target object, the image acquisition device being capable of acquiring a target image containing an image of the target object, and the image acquisition device being a device different from the communication responding device;
a first controlling module (903) configured to control the image acquisition device to acquire the target image; and
a second controlling module (904) configured to control the image acquisition device to send the target image to the communication requesting device.

8. The device of claim 7, wherein the first determining module (901) comprises:
a detection sub-module (9011) configured to detect within a preset time period from when the communication request is received, whether the communication responding device performs a communication responding operation,; and
a response sub-module (9012) configured to determine the target object according to the communication request in response to detecting no communication responding operation within the preset time period.

9. The device of claim 7 or 8, wherein the target object comprises at least one of: a user, an article and a room corresponding to the communication responding device.

10. The device of claim 9, wherein the target object comprises the user, and the first determining module (901) comprises:
a first acquiring sub-module (9013) configured to acquire an identification of the communication responding device according to the communication request; and
a first determining sub-module (9014) configured to determine the user according to the identification of the communication responding device.

11. The device of claim 9, wherein the target object comprises the user, and the second determining module (902) comprises:
a second acquiring sub-module (9021) configured to acquire a location of the target object; and
a second determining sub-module (9022) configured to determine the image acquisition device according to the acquired location.

12. The device of any one of claims 7 to 11, wherein the target object comprises the user, and the device further comprises:
a third controlling module (905) configured to control the image acquisition device to acquire a first voice data surrounding the target object;
a fourth controlling module (906) configured to control the image acquisition device to send the first voice data to the communication requesting device;
a fifth controlling module (907) configured to control the communication requesting device to acquire a video data or a second voice data; and
a sixth controlling module (908) configured to control the communication requesting device to send the video data or the second voice data to the image acquisition device.

13. A device for communication processing, comprising:
a processor (1411);
a memory (1412) for storing instructions executable by the processor (1411);
wherein the processor (1411) is configured to perform the method for communication processing according to any of claims 1 to 6.

14. A computer-readable storage medium having stored therein instructions that, when being executed by a processor, cause the processor to perform the method for communication processing according to any of claims 1 to 6.

15. A computer program including instructions for executing the steps of the method for communication processing according to any of claims 1 to 6 when said program is executed by a computer.
